# EUROPEAN PATENT SPECIFICATION

(11) **EP 1 128 124 B1**
(45) Date of publication and mention of the grant of the patent: **28.07.2010**
(21) Application number: 00119827.4
(22) Date of filing: 12.09.2000
(51) Int. Cl.: F21S 8/10, F21V 7/00, F21W 101/10

(54) **Headlamp for vehicle**
Fahrzeugscheinwerfer
Projecteur pour véhicule

(30) Priority: 25.02.2000 JP 2000049563; 10.08.2000 JP 2000242551
(43) Date of publication of application: 29.08.2001
(73) Proprietor: Stanley Electric Co., Ltd., Meguro-ku Tokyo (JP)
(72) Inventor: Oyama, Hiroo, Meguro-ku, Tokyo (JP); Kawaguchi, Yoshifumi, Meguro-ku, Tokyo (JP); Adachi, Go, Meguro-ku, Tokyo (JP); Okamoto, Masahito, Meguro-ku, Tokyo (JP)
(74) Representative: Leitner, Waldemar

(56) References cited:
- EP-A- 0 126 281
- EP-A- 1 039 213
- FR-A- 2 394 745
- GB-A- 260 976
- GB-A- 841 367
- US-A- 1 557 097
- US-A- 2 004 831
- US-A- 4 680 679
- US-A- 5 918 973
- PATENT ABSTRACTS OF JAPAN vol. 2000, no. 09, 13 October 2000 (2000-10-13) -& JP 2000 182411 A (STANLEY ELECTRIC CO LTD), 30 June 2000 (2000-06-30)

## Description

### BACKGROUND OF THE INVENTION

### 1. Field of the Invention

The present invention relates to headlamps for vehicles, and particularly relates to a headlamp for a vehicle, being capable of improving luminous flux efficiency to a light source and performance of the lamp, and also capable of providing an original design for appearance of the headlamp which has not been existed. Furthermore, the present invention relates to a headlamp for a vehicle, being capable of changing luminous intensity distribution properties for driving and for passing-by (or so-called "high-beam" and "low-beam") by utilizing a single light source.

### 2. Detailed Description of the Prior Art

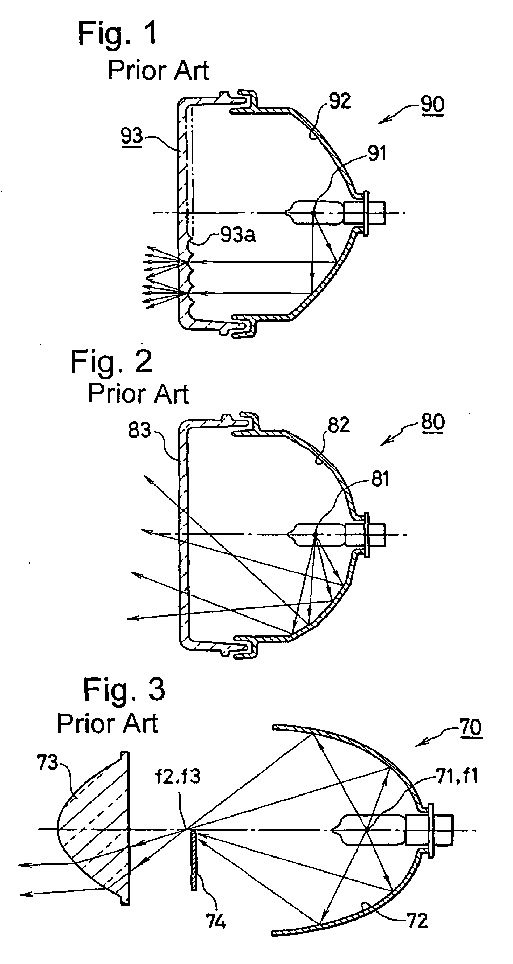

Figs. 1 to 3 show constructions of conventional a headlamp for a vehicle. Lamp 90 shown in Fig. 1 is composed of a light source 91, a revolved parabolic reflector 92 in which the light source 91 is positioned at its focal point, and a lens 93 having lens cuts 93a provided thereon. Light emitted from the light source 91 is reflected by the above-mentioned revolved parabolic reflector 92 so as to become parallel with reference to the optical axis of the light source. The reflected light is diffused appropriately by the lens cuts 93a to obtain a required luminous intensity distribution property.

Moreover, lamp 80 shown in Fig. 2 is composed of a light source 81, a composite reflector 82, and a lens 83. The composite reflector 82 is composed of a plurality of parabolic columnar reflector in which a parabola appears in a vertical cross section and a straight line appears in a horizontal cross section when the lamp 80 is installed. Incidentally, the light source 81 is arranged at the focal point of the parabola. Further, the lens 83 is not provided with any lens cut formed thereon and is plain. In this lamp 80, a luminous intensity distribution property thereof can be adjusted by the above-mentioned composite reflector 82 itself. Furthermore, lamp 70 shown in Fig. 3 is composed of a light source 71, an elliptic type reflector 72, an aspheric lens 73, and a shade 74 if required. The elliptic type reflector 72 has a first focal point f1 where the light source 71 is positioned and is composed of such as revolved ellipsoidal reflector, composite ellipsoidal surface, ellipsoidal free curved surface or the like. In this case, the major axis of the elliptic type reflector 72 coincides with illuminating direction and a light source image is generated by focusing it at the second focal point f2 thereof. Illuminating light can be obtained by enlarging and projecting the light source image by the aspheric lens 73. A desired luminous intensity distribution property can be obtained by shielding an unnecessary portion of light by means of the shade 74 (in the shown conventional example, lower half of luminous flux converging at the second focal point f2 is shielded). Incidentally, the lamp system employing this type of elliptic type reflector 72 is called as a projector type lamp.

However, out of the above-mentioned prior art lamps, for the lamp 90 shown in Fig. 1 the lens cuts 93a needs to have a large optical power. As a result, change in thickness of the lens 93 becomes large, deteriorating transparency thereof. Accordingly, there are problems in that it is impossible to provide a suitable lamp appearance having transparency and a preferable depth to which consumers prefer in the market.

Furthermore, in the lamp 80 shown in Fig. 2, since the lens 83 is plain with no lens cut provided thereon, a suitable lamp appearance having a superior transparency can be obtained. However, it is difficult to ensure a luminous intensity distribution property in a width direction because the luminous intensity distribution property is formed by the composite reflector 82 positioned relatively deep. As a result, there is a problem in that formation of luminous intensity distribution property is limited.

Further, it is difficult to install the lamp 70 shown in Fig. 3 because of its depth. In addition, the illuminating area is small due to the small diameter of the employed aspheric lens 73. When the lamp 70 is employed as a headlamp, visibility thereof from opposed vehicles may be deteriorated.

In addition to the above-mentioned problems, since the lamps 90, 80, 70 having the above-mentioned prior art con are widely employed, it is difficult to discriminate between these lamps and the other ones and also obtain an original design. Furthermore, each luminous flux efficiency of the lamps 90, 80, 70 having the above-mentioned prior art configurations is affected in response to area of the reflector. Thus, when the lamp is reduced in its dimension (for example, making it thinner in width or both vertical and horizontal dimensions be made smaller) due to the demand in the market, brightness thereof significantly becomes low.

Besides, cross-sectional shape of luminous flux in the lamp 70 shown in Fig. 3 near the shade 74 is a semicircular shape (lower half of circle). When the luminous flux having such the shape is projected toward the illuminating direction by the projector lens 73 having a focal point f3 near the shade 74, the luminous flux is made inverted and emitted to have an upper half of circle shape toward the illuminating direction. Thus, a luminous intensity distribution shape suitable for passing-by can be obtained because the projected light does not contain any upward light which is the cause of dazzling light for opposed vehicles. However, in actual operation, in order to readily recognize walkers passing by or road signs, a shade 74 is modified to generate an appropriate light in the upper left-side direction for left-side traffic.

In this lamp 70, however, almost half of the reflected light from the elliptic type reflector 72 is shielded by the shade 74 as clearly shown in the above-described explanation, as a result the luminous flux efficiency to the light source 71 is lowered and there is another problem in that the lamp 70 is relatively darker for energy consumption.

Moreover, it has been proposed that with this type of a projector headlamp 70 provided is a luminous intensity distribution switching means for changing luminous intensity distribution properties for driving and for passing-by by retreating, for example, a shade 74 from the luminous flux of the light reflected from the elliptic type reflector 72. In this case, however, any control for the shape of the luminous intensity distribution property is not substantially carried out and there is still another problem in that any luminous intensity distribution property for practical use can not be obtained.

A headlamp for a vehicle having all the features of the precharacterizing portion of claim 1 is known from GB 841367. This document discloses a headlamp for a vehicle, comprising a light source, a first reflector formed of a parabolic reflector and having a focal point at which the light source is positioned. Furthermore, the known headlamp comprises a light guide passage for guiding light to the back side of the reflector formed of a parabolic reflector and provided outside thereof corresponding to the light guide passage of the first reflector. The headlamp exhibits a lens provided in front of the first and second reflectors in an illuminating direction.

US 5,918,973 discloses a headlamp device of a vehicle comprising a passing beam lamp unit, a driving beam lamp unit, and optical fibers connecting them together. A discharge lamp serves as a light source of the passing beam lamp unit. A reflecting mirror disposed ahead of the discharge lamp reflects directly forwardly emitted light from the discharge lamp, and concentrates the light into a condensing portion. The optical fibers guide the light concentrated into the condensing portion to the driving beam lamp unit. The light guided by the optical fibers is used as a light source of the driving beam lamp unit. A shutter mechanism shuts off the light guided by the optical fibers at the time of switching to passing beam, and passes the light guided by the optical fibers at the time of switching to driving beam. The head lamp device using a discharge lamp as a light source eliminates the disadvantage of a discharge lamp type head lamp, a very high cost. It also equalizes the color temperatures of the passing beam and the driving beam, and improves the balance of luminous intensity distribution, and forward visibility.

Consequently, this document discloses that the light source is condensed by a reflecting mirror into a condensing portion provided with a light collecting and of an optical conductor, such as a optical fiber, for providing a light source for a driving beam unit at the place other then main reflector and the driving beam unit has a convexed lens as an essential member.

### SUMMARY OF THE INVENTION

It is therefore the object of the invention to provide a lamp for a vehicle improving the flux of light transmitted to the second reflector through the light guide passage.

This object is achieved by a headlamp vehicle exhibiting the features of the characterizing portion of claim 1.

An object of the present invention is to provide a headlamp for a vehicle being capable of improving luminous flux efficiency to a light source and increasing its brightness further even when the same light source is used. Another object of the present invention is to provide a headlamp for a vehicle being capable of providing an original design for appearance of the headlamp which has not been existed without decreasing the luminous intensity even when the height thereof is decreased.

In order to achieve the above-mentioned objects, the present invention provides a headlamp for a vehicle, comprising a light source; a first reflector formed of a parabolic reflector and having a focal point at which the light source is positioned; a light guide passage for guiding light to the backside of the first reflector, provided at an appropriate position thereof; a second reflector formed of a parabolic reflector and provided outside thereof corresponding to the light guide passage of the first reflector; a third reflector provided in the vicinity of an optical axis of the first reflector for converging and transmitting a light from the light source to the vicinity of the light guide passage; and a lens provided in front of the first and second reflectors in an illuminating direction.

According to the headlamp for a vehicle of the present invention, light which is not captured by the first reflector and which has not been utilized in the prior art can be collected and utilized by the third reflector, thereby being capable of illuminating it in the illuminating direction by the second reflector via the light guide passage. As a result, there is provided a headlamp for a vehicle being capable of improving luminous flux efficiency to a light source and increasing its brightness further even when the same light source is used and also improving performance of the lamp.

In the design aspect, even when, for example, the height of the first reflector is decreased so that the captured quantity of luminous flux by the first reflector is decreased, the decreased quantity of luminous flux can be collected by the third reflector and utilized by the second reflector as a illuminating light. Accordingly, it is possible to provide an original design having a lens height of about 30 mm which has not been able to be obtained according to the prior art without deteriorating any performances as a headlamp. Thus, a superior effect to improve commercial value can be provided.

In the present invention, a focal point of the above-mentioned second reflector may be set in the vicinity of the light guide passage.

Further, the third reflector may be an elliptic type reflector having a first focal point at which the light source is positioned and a second focal point in the vicinity of which an inlet of the light guide passage is positioned.

In addition, the third reflector may serve as a hood for the light source.

Furthermore, an optical axis of the second reflector is almost parallel to the optical axis of the first reflector on at least one cross section in either horizontal direction or vertical direction.

Further, it is preferred that the optical axis of the second reflector may be set by about 2° downward relative to the optical axis of the first reflector.

Besides, the light guide passage may be provided above a horizontal line which passes through the light source and which is perpendicular to the optical axis and at a range of ±45° around the light source as the origin in a forward and backward direction relative to the horizontal line on the basis of the installation state of the headlamp for a vehicle.

Further, the light guide passage may have an inlet and an outlet which are appropriately spaced and may be tubular.

In addition, in the present invention, at least a part of the outlet of the light guide passage may contain a plane perpendicular to a straight line which is perpendicular to the optical axis of the second reflector.

Furthermore, the shape of the outlet of the light guide passage may be adjusted to be suitable to form a luminous intensity distribution property required for the second reflector.

Besides, an upper end of the light guide passage may coincide with at least one of an upper end of the first reflector and an upper end of the second reflector.

Furthermore, an upper end of the effective area of the lens may coincide with or may be set lower than a lower end of the light guide passage.

A top of the first reflector may be formed of convex protruding inside of the first reflector to reflect upward light reflected from the first reflector as a horizontal light or downward light.

The inside of the light guide passage may be treated by reflection treatment or may be filled with a light guide material.

Further, the first reflector may be a parabolic free curved surface and the third reflector may have a width at the front side of the light source wider than that at the back side of the light source.

### BRIEF DESCRIPTION OF THE DRAWINGS

These and other objects and advantages of the present invention will become clear from the following description with reference to the accompanying drawings, wherein:
Fig. 1 is a cross sectional view showing a prior art headlamp;
Fig. 2 is a cross sectional view showing another prior art headlamp;
Fig. 3 is a cross sectional view showing still another prior art headlamp;
Fig. 4 is a perspective view showing a first embodiment of a headlamp for a vehicle according to the present invention, a part of which is disassembled;
Fig. 5 is a cross sectional view showing an essential part of a second embodiment of a headlamp for a vehicle according to the present invention;
Fig. 6 is a cross sectional view showing a third embodiment of a headlamp for a vehicle according to the present invention;
Fig. 7 is a front view showing a fourth embodiment of a headlamp for a vehicle according to the present invention;
Fig. 8 is a cross sectional view showing a fifth embodiment of a headlamp for a vehicle according to the present invention;
Fig. 9 is a front view showing a sixth embodiment of a headlamp for a vehicle according to the present invention;
Fig. 10 is a cross sectional view taken along the A-A line of Fig. 9;
Fig. 11 is a cross sectional view showing a seventh embodiment of a headlamp for a vehicle according to the present invention;
Fig. 12 is a cross sectional view showing an essential part of an eighth embodiment of a headlamp for a vehicle according to the present invention;
Fig. 13 is a cross sectional view taken along the B-B line of Fig. 12;

### DETAILED DESCRIPTION OF THE PREFERRED EMBODIMENTS

Hereinafter the present invention will be described in more detail by way of embodiments with reference to the accompanying drawings. Further, for easy understanding, this embodiment shows an example in which there are provided a pair of the second reflectors at both sides of the first reflector in a horizontal direction and also provided are the light guide passage and the third reflector corresponding to the second reflector. However, the number and the arranged position of the second reflectors are not limited to the embodiment. Also the number and the position of each of the light guide passage and the third reflector are not limited thereto. Further, the directions of back and front, up and down, and left and right are referred on the basis of the state where the vehicle installed the headlamp 21 is seen by a driver.

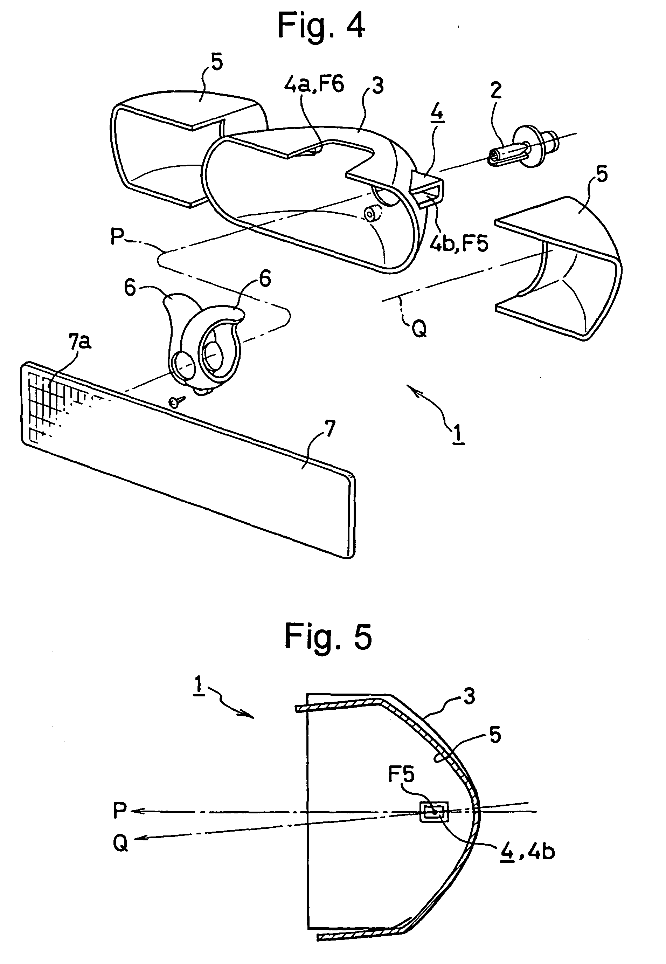

The first embodiment according to the present invention is shown in Fig. 4. Reference numeral 1 designates a headlamp for a vehicle according to the present invention. The headlamp 1 for a vehicle is composed of a light source 2, a first reflector 3 provided with light guide passages 4, second reflectors 5, third reflectors 6, and a lens 7 as main components.

The first reflector 3 is a parabolic reflector which has a focal point where the light source 2 is positioned and which is a revolved parabolic reflector or a free curved surface. Light from the light source 2 is reflected by the first reflector 3 to provide parallel light or appropriately widened light in the illuminating direction through the lens 7. The function thereof is almost the same as that of the conventional example shown in Fig. 1 or 2.

When a metal halide discharge lamp is employed as the light source 2, it tends to generate colored light emitted from the lower half of the light source 2. In this case, the optical axis P of the first reflector 3 may set below the center of the vertical width (height) of the first reflector 3 so as to capture the light emitted from the upper half of the light source 2 as much as possible.

The light guide passages 4 are provided on the first reflector 3. The position and shape of the light guide passage 4 may be determined in relation to the second reflectors 5 and the third reflectors 6. Such a determination will be described hereafter in the below-mentioned description for the second reflectors 5 and the third reflectors 6.

The second reflector 5 is a parabolic reflector which has a focal point F5 such as a revolved parabolic reflector or a free curved surface like the first reflector 3. The focal point F5 is set to be positioned in the vicinity of an outlet 4b of the light guide passage 4. An optical axis Q of the second reflector 5 is in parallel with the optical axis P of the first reflector 3.

A pair of the second reflectors 5 are provided at both sides of the first reflector 3 in a state where the headlamp 1 is installed into vehicle, respectively. Accordingly, the respective light guide passages 4 are provided on the right and left sides of the first reflector 3 corresponding to the positions where the second reflectors 5 are arranged. Incidentally, in this embodiment the respective light guide passages 4 are provided at the symmetric positions relative to the vertical line passing through the light source 2.

The third reflector 6 is formed of a part of a revolved elliptic type reflector.

The revolved elliptic type reflector has its first focal point positioned at or in the vicinity of the light source 2 and its second focal point F6 at or in the vicinity of an inlet 4a of the light guide passage 4, and is formed by revolving an ellipse around its major axis passing through both the focal points. As described above, in the present embodiment a pair of the light guide passages 4 are provided at the respective positions of the first reflector 3, and accordingly there are provided a pair of the third reflectors 6.

In this case, since the pair of third reflectors 6 have the first focal points where the light source 2 is arranged, the third reflectors 6 are arranged inside the first reflector 3 which has its focal point at the same position, i.e. the position of the light source 2. Thus, the first reflector 3 and the third reflectors 6 are interfered with each other. Furthermore, the pair of third reflectors 6 are interfered with each other. Accordingly, when the third reflector 6 is designed, distribution of the light from the light source 2 to the first reflector 3 and the third reflectors 6 should be considered. Light reaching the first reflector 3 from the light source 2 is basically reflected by the first reflector 3, where the third reflectors 6 are appropriately cut, and further luminous flux which reaches an area other than the first reflector 3 is converged at the inlet 4a of the light guide passage 4 by the third reflector 6. In addition, the third reflectors 6 are so constructed that such an interference therebetween is not generated by cutting the interfered portion of the third reflectors 6.

Here, in the construction of this type of the headlamp 1 for a vehicle, usually a food is provided to shield a part of the reflector where reflected light cannot contribute to form luminous intensity distribution properties and to shield direct light from the light source 2 to the opposed vehicles not to generate dazzling light.

The third reflectors 6 are so constructed that light which does not reach the first reflector 3 is utilized. Accordingly, the light captured by the third reflector 6 is almost the same light conventionally shielded by a hood. Thus, the third reflector 6 can serve as a hood if the third reflector 6 is so constructed that the light which does not reach the first reflector 3 is captured by the third reflector 6.

Furthermore, in case where a discharge type light source called as D2R type is employed, in order to facilitate provision of luminous intensity distribution for passing-by a bulb of the discharge light source is directly provided with a shielding film. In this case, if a discharge lamp not provided with any shielding film is employed to utilize the un-shielded light conventionally having been un-utilized is captured and utilized by the third reflector 6, a further improvement of the luminous flux efficiency can be obtained. If the third reflector 6 is utilized for serving as the shielding film described above, it becomes unnecessary to provide two types of discharge lamps for right-side traffic and left-side traffic and rationalization of production thereof can be achieved.

The lens 7 covers the front sides of the above constructed light source 2, the first reflector 3, the second reflectors 5 and the third reflectors 6. In addition, when the first reflector 3 and the second reflectors 5 are formed of revolved parabolic reflectors, the lens 7 is provided with lens cuts 7a to form a luminous intensity distribution property. When the first reflector 3 and the second reflectors 5 are free curved surfaces, both reflectors 3 and 5 can form a desired luminous intensity distribution directly and the lens 7 does not substantially need to have lens cut formed thereon. Here, according to the results of the inventors' studies to complete the present invention, the light converged at the vicinity of the inlet 4a of the light guide passage 4 by the afore-mentioned third reflector 6 is reflected by the inner surface of the light guide passage 4 when the light passes through the light guide passage 4 and reach the outlet 4b. As a result, the light emitted from the outlet 4b will be lost its regularity such as directivity.

Thus, in an actual practice, like as the second embodiment shown in Fig. 5, it is confirmed that the second reflector 5 should be designed not to generate an upward light when it is reflected and lost its regularity, and that the optical axis Q thereof is preferably set downward by about 2° relative to the illuminating direction.

Next, explanation will be made on the function and advantage of the headlamp 1 for a vehicle according to the present invention constructed as above. In the present invention, light from the light source 2 which is not captured by the first reflector 3 is utilized by providing the third reflectors 6 formed of the revolved elliptic reflector to reflect it as an illuminating light from the second reflectors 5 via the light guide passages 4. Accordingly, it is possible to implement a brightener headlamp with the same light source 2 by improving the luminous flux efficiency of the light source 2.

As to the outer appearance, in the prior art, if the width of the reflector in the vertical direction (height) becomes small, the headlamp inevitably becomes darker due to the decrease in reflecting area. According to the present invention, however, luminous flux which becomes un-utilizable due to the decrease in reflecting area of the first reflector 3 can be collected by the third reflectors 6 and guided to the second reflectors 5, thereby preventing it from being darkened. As a result, it is possible to design a headlamp having a lens with its width of 30 mm in the vertical direction, thereby enabling of implementing an original designed headlamp 1 for a vehicle which has not been implemented by the prior art.

In the first embodiment, light guide passage 4, second reflector 5, and third reflector 6 are provided as a pair of ones at the right and left sides, respectively. However, in the present invention, the numbers and positions of light guide passage 4, second reflector 5, and third reflector 6 are not limited thereto, but freely set appropriately.

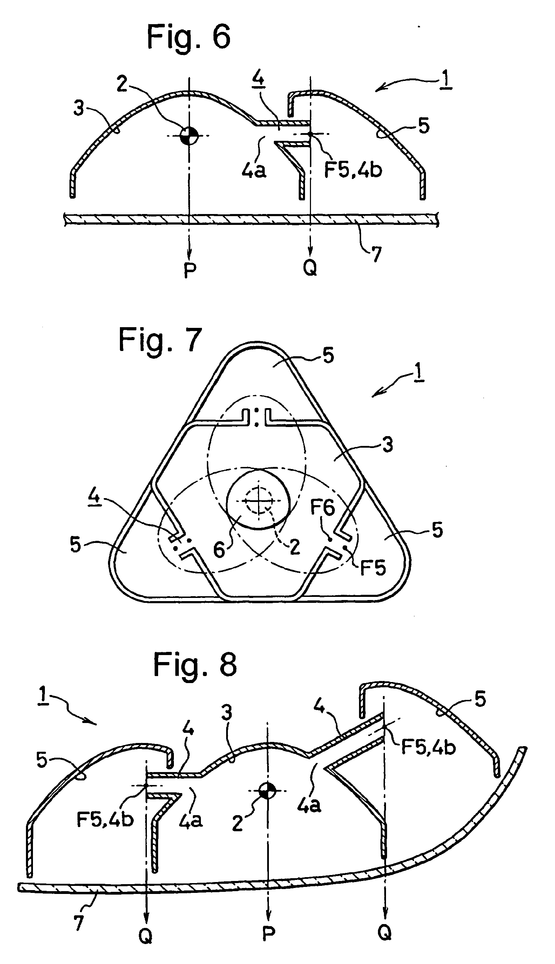

For example, when a composite lamp provided with an auxiliary headlamp (such as fog lamp) at inner side of vehicle is employed, if the second reflectors 5 are arranged at the right and left outsides of the first reflector 3, an area occupied with the headlamp is too large, resulting in losing of any space for the auxiliary headlamp. In the above case, there is provided another example of the headlamp 1 for a vehicle shown in Fig. 6 as the third embodiment. Here, the headlamp 1 for a vehicle is shown as a cross, section along the horizontal direction when the headlamp is installed. In the headlamp 1 for a vehicle, the second reflector 5 is provided only at the outer side of the first reflector. Accordingly, single light guide passage 4 and single third reflector 6 are provided corresponding to the second reflector 5 to ensure the space for the provision of the auxiliary headlamp.

Furthermore, if a pair of the second reflectors 5 are provided, the position therefor is not limited to the horizontal direction. For example, although drawings are not present, the headlamp 1 of the first embodiment is rotated about the optical axis P by 90° and the lens cuts 7a provided on the lens 7 are changed corresponding to the arrangement of the second reflectors to obtain another headlamp 1 being longitudinally long in outer appearance.

Furthermore, the second reflector 5 can be provided at two or more positions. Fig. 7 shows the fourth embodiment in which the second reflectors are provided at the upper portion, and lower horizontal sides of the first reflector 3. In this case, the light guide passage 4 and the third reflector 6 are provided in the same number corresponding to the number of the second reflector 5.

In the first to fourth embodiments, when plural second reflectors are provided, basically the second reflectors 5 are arranged so as to be set at the same position in the front and rear direction along with the optical axis P of the light source. However, the present invention is not limited thereto. That is, as shown in Fig. 8 as a horizontal cross section of the fifth embodiment, a pair of second reflectors 5 provided at the right and left outsides of the first reflector 3 are shifted with each other in the front and rear direction. Thus, corresponding to this arrangement, the light guide passages 4 and the third reflectors 6 are not symmetric. According to this arrangement, if a lens 7 curved to fit a curved side body of a vehicle is employed, the first reflector 3 and the second reflectors 5 are arranged all over the backside of the lens 7, thereby enabling of the entire illumination of the headlamp.

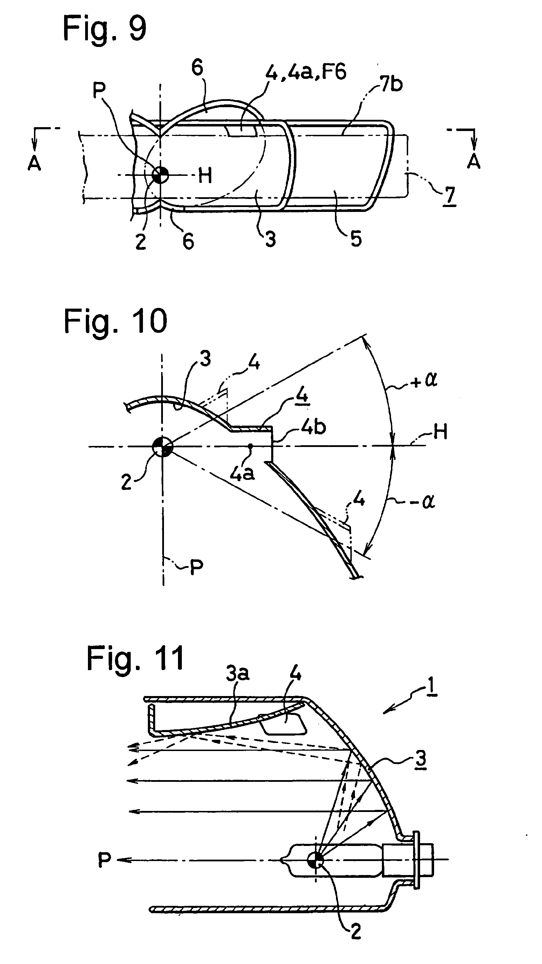

Figs. 9 and 10 show essential parts of headlamp 1 for a vehicle of the sixth embodiment according to the present invention. This sixth embodiment relates to a feature which is the position where the light guide passage 4 is provided. As a result of the examination by the inventors, when an ellipse having a larger ratio of the major axis to the minor axis is employed as the revolved elliptic reflector of the third reflector 6, the interfered quantity to the first reflector 3 is decreased while the cut amount therefor is also decreased which is preferred. Thus, it was found that the luminous flux captured by the third reflector 6 become increasing tendency.

Further, as described above, when a discharge lamp is employed as the light source 2, the optical axis P of the first reflector 3 is set lower. Accordingly, in order to set the major axis thereof longer, the light guide passage 4 (where the second focal point F6 of the third reflector is positioned) is preferably arranged at the same level or higher than the horizontal line H passing through the optical axis P. As shown in the drawings, the light guide passage 4 is provided at the upper end of the first reflector 3 so as to make the major axis longest (refer to Fig. 9).

The length of the major axis of the revolved elliptic reflector forming the third reflector 6, as shown in Fig. 10, can also be changed by shifting the light guide passage 4 in the front and rear direction relative to the optical axis P of the first reflector 3. When the light guide passage 4 is shifted forward (in the figure, in the direction of the -α degree), the major axis can be set longer. However, interfered quantity between the first reflector 3 and the third reflectors 6 becomes large. Therefore, cut quantity must be increased, but sufficient effect cannot be obtained.

On the other hand, when the light guide passage 4 is shifted backward (in the figure, in the direction of the +α degree), the major axis is set shorter, and interfered quantity between the first reflector 3 and the third reflectors 6 become small. However, the interfered quantity between the first reflector 3 and the second reflectors 5 become large, and accordingly also sufficient effect cannot be obtained. Accordingly, in the present invention the light guide passage 4 should be set in the direction of the α degree of ± 45° on a plane including the horizontal line H and the optical axis P on the basis of the horizontal line H perpendicular to the optical axis P passing through the light source 2.

Here, if the light guide passage 4 is arranged near the upper end of the first reflector 3 which is above the light source 2, the reflected light generated by the third reflector 6 become upward. In this case, when the reflected light by the third reflector 6 reach the first reflector 3, the light reflected thereby become upward, or a dazzling light.

In the present invention, the position of the light guide passage 4 relative to the lens 7 is regulated to prevent any dazzling light from generating. As shown in Fig. 9 by two-dot chain line, the upper end 7b of the effective area of the lens 7 may coincide with the lower end of the inlet 4a of the light guide passage 4 or lower, the upward light which reaches the first reflector 3 from the third reflector 6 and is reflected thereby may not emit outward whereas reaching the lens 7, thereby preventing any dazzling from generating.

In addition, such prevention of dazzling light may be implemented by changing the shape of a ceiling plate 3a of the first reflector 3. Fig. 11 shows the seventh embodiment. The ceiling plate 3a is formed of a convex curved surface of which tangent lines become downgrade along the direction of the light reflected by the first reflector 3, i.e., which projects inwardly to the first reflector 3. The ceiling plate 3a can convert the upward light to downward one, thereby prevent any dazzling light from generating. In this case, the gradient of the tangent at every portion of the ceiling plate 3a is appropriately adjusted so that the reflected light reaches an arbitrary position to form a desired luminous intensity distribution.

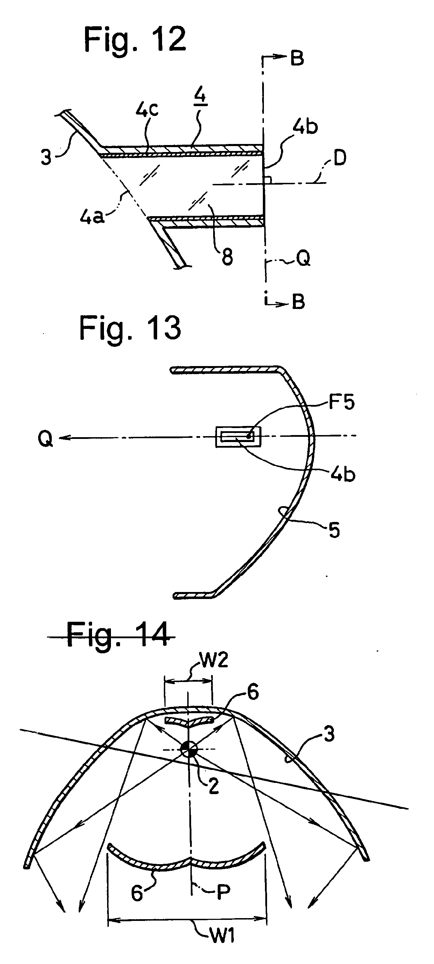

Fig. 12 shows an essential part of the eighth embodiment according to the present invention. In the construction of the present invention, the second reflector 5 is formed of revolved parabolic reflector or the like having its focal point F5 at a position where the outlet 4b of the light guide passage 4 is positioned. Namely, the position where the second reflector 5 is arranged is set according to the outlet 4b of the light guide passage 4. As a result, depending on the position of the outlet 4b, the second reflector 5 may be overlaid with the first reflector 3. Accordingly, the light reflected from the second reflector 5 may not be used effectively.

In view of the foregoing, in the present invention an appropriate space is provided between the inlet 4a and the outlet 4b by forming an almost tubular shape for the light guide passage 4. For example, when the space between the inlet 4a and the outlet 4b are widened, the second reflector 5 can be arranged more outward, thereby decreasing the interfered quantity with the first reflector 3.

In this case, in order to prevent loss of light within the light guide passage 4, it can be compensated by providing a reflection treatment on the inside of the light guide passage 4, such as an aluminum vapor deposition to form a reflector 4c. Alternately, inside the light guide passage 4 a light guide member 8, such as an optical fiber, a light guide plate (block) made of transparent resin and the like, may be filled. Further, formation of the reflector 4c may be implemented with the filling of the light guide member 8.

The present invention also provides a preferred shape of the outlet 4b of the light guide passage 4. As discussed above, the outlet 4b of the light guide passage 4 functions as a light source for the second reflector 5. The plane formed by the outlet 4b may be designed as a plane having a normal line D perpendicular to the optical axis Q of the second reflector 5. More preferably the shape of the outlet 4b may be designed, as shown in Fig. 13, as a rectangle having a longer side along the optical axis Q. As a result, a virtual image of the light source 2 at the outlet 4b appears, like as a C-8 type filament, while it coincides with the optical axis Q in a longitudinal direction. Accordingly, the reflected light by the second reflector 5 may be similar to that in the case where the C-8 filament is employed. When a lens cut to be provided is designed at a position of the lens 7 corresponding to the second reflector 5, it is possible to apply a conventional technique therefor. Thus, it is unnecessary to employ an advanced and difficult technique to implement the present invention, thereby facilitating carrying out of the invention.

Fig. 14 shows the ninth embodiment. In this embodiment according to the present invention, the first reflector 3 can employ a revolved parabolic reflector by which a reflected light becomes a parallel light, or a parabolic free curved surface by which a reflected light may have a desired luminous intensity distribution. Here, when a free curved surface is employed, the direction of the light reflected at each portion of the reflecting surface may be set freely.

By utilizing this characteristic, the first reflector 3 is formed of a free curved surface while it is designed so as to generate an outwardly reflected light at a portion thereof in the vicinity of the third reflector 6, i.e. in the vicinity of the central portion (optical axis P). In this case, the third reflector 6 does not interfere with the light reflected from the first reflector 3 and the width W1 at the front side of the light source 2 may be wider than the width W2 of the reflector at the back side of the light source 2.

Here, the reflecting surface of the third reflector 6 at the front side of the light source 2 may capture a light from the light source 2 which has never been captured by the first reflector 3. Accordingly, by widening the width W1 at this position the captured quantity of luminous flux from the light source can be increased, thereby implementing a brightener lamp with the same light source 2.

## Claims

1. A headlamp for a vehicle, comprising a light source (2); a first reflector (3) formed of a parabolic reflector and having a focal point at which the light source is positioned; a light guide passage (4) for guiding light to the backside of the first reflector (3), provided at an appropriate position of the first reflector (3); a second reflector (5) formed of a parabolic reflector and provided outside of the first reflector (3) corresponding to the light guide passage (4) of the first reflector (3), **characterized in that** the light guide passage (4) is provided above a horizontal line (H) which passes through the light source (2) and which is perpendicular to the optical axis (P) and at a range of +/-45 DEG around the light source (2) as the origin in a forward and backward direction relative to the horizontal line (H) on the basis of the installation state of the headlamp for a vehicle, that a focal point (F5) of said second reflector (5) is set in the vicinity of an outlet (4b) of said light guide passage (4), that the light converged at the vicinity of the inlet (4a) of the light guide passage (4b) passes through the light guide passage (4) and reaches the outlet (4b) of the light guide passage (4), so that an virtual image of the light source (2) appears at the outlet (4b) of the light guide passage (4), that a third reflector (6) provided in the vicinity of an optical axis (P) of the first reflector (3) for converging and transmitting a light from the light source to the vicinity of the light guide passage (4), and that said third reflector (6) is an elliptic type reflector having a first focal point at which said light source (2) is arranged and a second focal point (F6) in the vicinity of which the inlet (4a) of said light guide passage (4) is positioned, and that a lens (7) is provided in front of the first and second reflectors (3, 5) in an illuminating direction.

2. The headlamp for a vehicle according to claim 1, wherein the third reflector (6) serves as a hood for said light source (2).

3. The headlamp for a vehicle according to any one of claims 1 or 2, wherein an optical axis (Q) of the second reflector (5) is almost parallel to the optical axis (P) of the first reflector (3) on at least one cross section in either horizontal direction or vertical direction.

4. The headlamp for a vehicle according to any one of claims 1 to 3, wherein the optical axis (Q) of the second reflector (5) is set by about 2 DEG downward relative to the optical axis (P) of the first reflector (3).

5. The headlamp for a vehicle according to any one of claims 1 to 4, wherein the light guide passage (4) having the inlet (4a) and the outlet (4b), which are appropriately spaced, is tubular.

6. The headlamp for a vehicle according to any one of claims 1 to 5, wherein at least a part of the outlet (4b) of the light guide passage (4) contains a plane perpendicular to a straight line which is perpendicular to the optical axis (Q) of said second reflector (5).

7. The headlamp for a vehicle according to any one of claims 1 to 6, wherein the shape of the outlet (4b) of the light guide passage (4) is adjusted to be suitable to form a luminous intensity distribution property required for the second reflector (5).

8. The headlamp for a vehicle according to any one of claims 1 to 7, wherein an upper end of the light guide passage (4) coincides with at least one of an upper end of the first reflector (3) and an upper end of the second reflector (5).

9. The headlamp for a vehicle according to any one of claims 1 to 8, wherein an upper end (7b) of the effective area of the lens (7) coincides with or is set lower than a lower end of the light guide passage (4).

10. The headlamp for a vehicle according to any one of claims 1 to 9, wherein a top of the first reflector (3) is formed of convex protruding inside of the first reflector (3) to reflect upward light reflected from the first reflector (3) as a horizontal light or downward light.

11. The headlamp for a vehicle according to any one of claims 1 to 10, wherein the inside of the light guide passage (4) is treated by reflection treatment.

12. The headlamp for a vehicle according to any one of claims 1 to 11, wherein the inside of the light guide passage (4) is filled with a light guide material.

13. The headlamp for a vehicle according to any one of claims 1 to 12, wherein the first reflector (3) is a parabolic free curved surface and the third reflector (5) has a width at the front side of the light source (2) wider than that at the back side of the light source (2).

## Patentansprüche

1. Fahrzeugscheinwerfer, enthaltend eine Lichtquelle (2); einen ersten Reflektor (3), der aus einem parabolischen Reflektor gebildet und einen Brennpunkt aufweist, an dem die Lichtquelle positioniert ist; einen Lichtleitkanal (4) um das Licht zu der Rückseite des ersten Reflektors (3) zu leiten, die an einer passenden Position des ersten Reflektors (3) vorgesehen ist; einen zweiten Reflektor (5), der aus einem parabolischem Reflektor gebildet und außerhalb des ersten Reflektors (3) entsprechend dem Lichtleitkanal (4) des ersten Reflektors (3) vorgesehen ist, **dadurch gekennzeichnet, dass** der Lichtleitkanal (4) mit einer horizontalen Linie (H) versehen ist, welche durch die Lichtquelle (2) verläuft und senkrecht zur optischen Achse (P) und in einem Bereich ± 45° um die Lichtquelle (2) als Mittelpunkt in einer vorwärtigen und rückwärtigen Richtung relativ zur horizontalen Linie (H) auf der Basis des Montagezustands des Fahrzeugscheinwerfers ist, dass ein Brennpunkt (F5) des zweiten Reflektors (5) in der Nähe eines Ausgangs (4b) des Lichtleitkanals (4) angeordnet ist, dass das Licht, welches im Bereich des Einlasses (4a) des Lichtleitkanals (4b) konvergiert, durch den Lichtleitkanal (4) durchtritt und den Ausgang (4b) des Lichtleitkanals erreicht, so dass ein virtuelles Bild der Lichtquelle (2) am Ausgang (4b) des Lichtleitkanals (4) erscheint, dass ein dritter Reflektor (6) in der Nähe einer optischen Achse (P) des ersten Reflektors (3) vorgesehen ist, um ein Licht der Lichtquelle zu sammeln und in der Nähe des Lichtleitkanals (4) zu transmittieren, und dass der dritte Reflektor (6) ein elliptischer Reflektortyp ist und einen ersten Brennpunkt hat, an dem die Lichtquelle (2) angeordnet ist, einen zweiten Brennpunkt (F6) aufweist, in dessen Nähe der Einlass (4a) des Lichtleitkanals (4) positioniert ist, und dass eine Linse (7) vor dem ersten und dem zweiten Reflektor (3, 5) in einer Beleuchtungsrichtung vorgesehen ist.

2. Fahrzeugscheinwerfer nach Anspruch 1, wobei der dritte Reflektor (6) als eine Haube für die Lichtquelle (2) dient.

3. Fahrzeugscheinwerfer nach einem der Ansprüche 1 oder 2, wobei eine optische Achse (Q) des zweiten Reflektors (5) fast parallel zu der optischen Achse (P) des ersten Reflektors (3) in wenigstens einem Querschnitt entweder in horizontaler oder vertikaler Richtung ist.

4. Fahrzeugscheinwerfer nach einem der Ansprüche 1 bis 3, wobei die optische Achse (Q) des zweiten Reflektors (5) ungefähr 2° nach unten relativ zur optischen Achse (P) des ersten Reflektors (3) angeordnet ist.

5. Fahrzeugscheinwerfer nach einem der Ansprüche 1 bis 4, wobei der Lichtleitkanal (4), der den Einlass (4a) und den Auslass (4b) aufweist, die entsprechend voneinander beabstandet sind, rohrförmig ist.

6. Fahrzeugscheinwerfer nach einem der Ansprüche 1 bis 5, wobei wenigstens ein Teil des Auslasses (4b) des Lichtleitkanals (4) eine Ebene, welche senkrecht zu einer geraden Linie, die senkrecht zu der optischen Achse (Q) des zweiten Reflektors (5) ist, enthält.

7. Fahrzeugscheinwerfer nach einem der Ansprüche 1 bis 6, wobei die Gestalt des Auslasses (4b) des Lichtleitkanals (4) derart angepasst ist, um geeignet zu sein, eine Leuchtstärkenverteilung, die für den zweiten Reflektor (5) erforderlich ist, auszubilden.

8. Fahrzeugscheinwerfer nach einem der Ansprüche 1 bis 7, wobei ein oberes Ende des Lichtkanals (4) mit einem unteren Endes des ersten Reflektors (3) und/oder einem unteren Endes des zweiten Reflektors (5) zusammenfällt.

9. Fahrzeugscheinwerfer nach einem der Ansprüche 1 bis 8, wobei ein oberes Ende (7b) des effektiven Bereichs der Linse (7) mit einem unteren Ende des Lichtkanals (4) zusammenfällt oder darunter angeordnet ist.

10. Fahrzeugscheinwerfer nach einem der Ansprüche 1 bis 9, wobei ein oberer Bereich des ersten Reflektors (3) konvex hervorstehend im Inneren des ersten Reflektors (3) ausgebildet ist, um Licht, das vom ersten Reflektor (3) nach oben reflektiert wurde, als ein horizontales Licht oder ein nach unten gerichtetes Licht zu reflektieren.

11. Fahrzeugscheinwerfer nach einem der Ansprüche 1 bis 10, wobei das Innere des Lichtleitkanals (4) mit einer Reflektionsbehandlung behandelt ist.

12. Fahrzeugscheinwerfer nach einem der Ansprüche 1 bis 11, wobei das Innere des Lichtleitkanals (4) mit einem Lichtleitmaterial gefüllt ist.

13. Fahrzeugscheinwerfer nach einem der Ansprüche 1 bis 12, wobei der erste Reflektor (3) ein parabolischer Freiflächenreflektor und der dritte Reflektor (5) eine weite an der Frontseite der Lichtquelle (2) aufweist, die größer ist als die Rückseite der Lichtquelle (2).

## Revendications

1. Projecteur pour un véhicule, comprenant une source de lumière (2) ; un premier réflecteur (3) constitué d'un réflecteur parabolique et ayant un foyer auquel la source de lumière est positionnée ; un passage de guidage de lumière (4) pour guider la lumière vers l'arrière du premier réflecteur (3), prévu à une position appropriée du premier réflecteur (3) ; un deuxième réflecteur (5) constitué d'un réflecteur parabolique et prévu à l'extérieur du premier réflecteur (3) correspondant au passage de guidage de lumière (4) du premier réflecteur (3), **caractérisé en ce que** le passage de guidage de lumière (4) est prévu au-dessus d'une ligne horizontale (H) qui passe par la source de lumière (2) et qui est perpendiculaire à l'axe optique (P) et dans une plage de ± 45° autour de la source de lumière (2) en tant qu'origine dans une direction en avant et en arrière par rapport à la ligne horizontale (H) sur la base de l'état d'installation du projecteur pour un véhicule, **en ce qu'**un foyer (F5) dudit deuxième réflecteur (5) est placé dans le voisinage d'une sortie (4b) dudit passage de guidage de lumière (4), **en ce que** la lumière qui converge dans le voisinage de l'entrée (4a) du passage de guidage de lumière (4b) passe à travers le passage de guidage de lumière (4) et atteint la sortie (4b) du passage de guidage de lumière (4), de sorte qu'une image virtuelle de la source de lumière (2) apparaît à la sortie (4b) du passage de guidage de lumière (4), **en ce qu'**un troisième réflecteur (6) est prévu dans le voisinage d'un axe optique (P) du premier réflecteur (3) pour faire converger et transmettre une lumière de la source de lumière vers le voisinage du passage de guidage de lumière (4), et **en ce que** ledit troisième réflecteur (6) est un réflecteur de type elliptique ayant un premier foyer auquel ladite source de lumière (2) est agencée et un deuxième foyer (F6) dans le voisinage duquel l'entrée (4a) dudit passage de guidage de lumière (4) est positionnée, et **en ce qu'**une lentille (7) est prévue devant les premier et deuxième réflecteurs (3, 5) dans une direction d'éclairage.

2. Projecteur pour un véhicule selon la revendication 1, dans lequel le troisième réflecteur (6) sert en tant que capot pour ladite source de lumière (2).

3. Projecteur pour un véhicule selon l'une quelconque des revendications 1 ou 2, dans lequel un axe optique (Q) du deuxième réflecteur (5) est presque parallèle à l'axe optique (P) du premier réflecteur (3) sur au moins une section transversale dans la direction horizontale ou dans la direction verticale.

4. Projecteur pour un véhicule selon l'une quelconque des revendications 1 à 3, dans lequel l'axe optique (Q) du deuxième réflecteur (5) est décalé d'environ 2° vers le bas par rapport à l'axe optique (P) du premier réflecteur (3).

5. Projecteur pour un véhicule selon l'une quelconque des revendications 1 à 4, dans lequel le passage de guidage de lumière (4) ayant l'entrée (4a) et la sortie (4b), qui sont espacées de manière appropriée, est tubulaire.

6. Projecteur pour un véhicule selon l'une quelconque des revendications 1 à 5, dans lequel au moins une partie de la sortie (4b) du passage de guidage de lumière (4) contient un plan perpendiculaire à une droite qui est perpendiculaire à l'axe optique (Q) dudit deuxième réflecteur (5).

7. Projecteur pour un véhicule selon l'une quelconque des revendications 1 à 6, dans lequel la forme de la sortie (4b) du passage de guidage de lumière (4) est ajustée pour être appropriée pour former une propriété de répartition d'intensité lumineuse nécessaire pour le deuxième réflecteur (5).

8. Projecteur pour un véhicule selon l'une quelconque des revendications 1 à 7, dans lequel une extrémité supérieure du passage de guidage de lumière (4) coïncide avec au moins l'une d'une extrémité supérieure du premier réflecteur (3) et d'une extrémité supérieure du deuxième réflecteur (5).

9. Projecteur pour un véhicule selon l'une quelconque des revendications 1 à 8, dans lequel une extrémité supérieure (7b) de la zone efficace de la lentille (7) coïncide avec une extrémité inférieure du passage de guidage de lumière (4) ou est placée plus bas que celle-ci.

10. Projecteur pour un véhicule selon l'une quelconque des revendications 1 à 9, dans lequel une partie supérieure du premier réflecteur (3) est constituée de l'intérieur saillant convexe du premier réflecteur (3) pour réfléchir vers le haut la lumière réfléchie par le premier réflecteur (3) en tant que lumière horizontale ou lumière vers le bas.

11. Projecteur pour un véhicule selon l'une quelconque des revendications 1 à 10, dans lequel l'intérieur du passage de guidage de lumière (4) est traité par un traitement de déflexion.

12. Projecteur pour un véhicule selon l'une quelconque des revendications 1 à 11, dans lequel l'intérieur du passage de guidage de lumière (4) est rempli d'un matériau de guidage de lumière.

13. Projecteur pour un véhicule selon l'une quelconque des revendications 1 à 12, dans lequel le premier réflecteur (3) est une surface incurvée libre parabolique et le troisième réflecteur (5) a une largeur du côté avant de la source de lumière (2) plus grande que celle du côté arrière de la source de lumière (2).
